(19) Europäisches Patentamt
European Patent Office
Office européen des brevets

(11) **EP 4 098 359 A1**

(12) **EUROPEAN PATENT APPLICATION**

(43) Date of publication:
**07.12.2022   Bulletin 2022/49**

(21) Application number: **21177194.4**

(22) Date of filing: **01.06.2021**

(51) International Patent Classification (IPC):
**B01J 29/46** (2006.01)          **B01D 53/94** (2006.01)
**B01J 37/02** (2006.01)

(52) Cooperative Patent Classification (CPC):
**B01J 29/46; B01D 53/9413; B01J 37/0213;**
B01J 2229/16

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **PAUL SCHERRER INSTITUT**
**5232 Villigen PSI (CH)**

(72) Inventors:
• **Wierzbicki, Dominik**
  **5415 Nussbaumen (CH)**

• **Ferri, Davide**
  **8050 Zürich (CH)**
• **Nachtegaal, Maarten**
  **5236 Remigen AG (CH)**
• **Kröcher, Oliver**
  **5313 Klingnau (CH)**

(74) Representative: **Fischer, Michael**
**Siemens AG**
**Postfach 22 16 34**
**80506 München (DE)**

(54) **ISOLATED METAL SPECIES IN METAL-ZEOLITE CATALYTIC MATERIAL FOR LOW TEMPERATURE SCR OF NOX WITH NH3**

(57)     Iron zeolites have been intensively studied as promising catalytic systems for reduction of nitrogen oxides by ammonia, which is an important environmental issue. Nevertheless, the structure of the most active Fe species in the low temperature NH3-SCR region, which are considered as isolated Fe, is still not fully clear. The most important limitation is the formation of oligomeric species, which are inactive at low temperature NH3-SCR, making bulky spectroscopic studies such as X-ray absorption spectroscopy challenging.

Herein, a novel synthesis method for an SCR catalyst is disclosed which results in the fabrication of Fe/ZSM-5 catalyst with almost exclusively isolated Fe species. This approach allows to get more insight into the structure and role of Fe isolated species using in-situ X-ray absorption spectroscopy. The obtained results point to the existence of distorted square-planar $Fe^{2+}$ species under reducing atmosphere, which is in good agreement with XANES simulations. At lower temperatures Fe species are partially moving out of square-planar to distorted square pyramidal geometry, which is caused by adsorption of one of the reactants. Such findings allow to improve the knowledge of structure-activity relationships and rational development and the application of Fe zeolites in NOx abatement.

Fig. 2

**Description**

The present invention relates to a method for preparing a metal/zeolite catalytic material for low temperature selective catalytic reduction (SCR) of nitrogen oxides (NOx) with ammonia ($NH_3$). Further, the present invention relates to a metal/zeolite catalytic material for low temperature selective catalytic reduction (SCR) of nitrogen oxides (NOx) with ammonia ($NH_3$). Furthermore, the present invention relates to a method for using a metal/zeolite catalytic material for low temperature selective catalytic reduction (SCR) of nitrogen oxides (NOx) with ammonia ($NH_3$).

The selective catalytic reduction of NOx by ammonia ($NH_3$) ($NH_3$-SCR) has been a major environmental catalysis topic over the last decades because of the constantly evolving and increasingly stringent worldwide emission regulations. While the first commercialized SCR technology for stationary sources involved vanadium-based catalysts, the need for higher activity at low temperature and of stability at high temperature together with the concerns on the impact of vanadium on health fostered the development of alternative catalytic systems especially for mobile applications, particularly for the treatment of the exhaust gases from gasoline engines. Cu- and Fe-based zeolites are currently the most widely studied and commercialized catalysts for NH3-SCR. Cu-based zeolite catalysts exhibit remarkable catalytic activity in the low temperature region (< 300°C). At high temperature, properly tailored Fe-zeolite catalysts display higher activity and especially higher N2 selectivity, which is of upmost importance in the treatment of flue gases of stationary sources because of the emissions of $N_2O$, a more potent greenhouse gas than $CO_2$ whose anthropogenic emissions exceed 900 kt/year.

Despite the large efforts made so far, there is still an impellent need to develop a catalyst that is highly active and selective in the whole temperature range. The well-defined molecular species obtained with Cu-zeolites at low temperature that are responsible for NH3-SCR are lost above 300-350°C and the attachment of Cu atoms to the zeolite framework endangers selectivity. These amminated species seem to be absent in Fe-based zeolites but their function is taken up by isolated monomeric Fe-species, which are considered the active Fe species in low temperature NH3-SCR.

However, isolated species are usually accompanied, and typically overwhelmed, by various polyatomic species and oxide particles that contribute mainly to the high temperature activity. The difficulty to prepare materials with very well-defined Fe sites is a major issue in the synthesis and development of Fe-based zeolites. The presence of polyatomic species such as oligomers, oxo iron species in exchange positions, $Fe_xO_y$ and $Fe_2O_3$ particles makes the assignment of the structure of the active site also very challenging, especially when a bulk method such as X-ray absorption spectroscopy (XAS) is exploited to derive structural and mechanistic insights under reaction conditions.

In situ XANES studies initially suggested that tetrahedral (Td) $Fe^{3+}$ species are the isolated active Fe species, while octahedral (Oh) and distorted Td $Fe^{3+}$ sites seem preferred over Td species in recent studies. Oligomeric species, which are believed to be inactive at low temperature, tend to form at the exchange positions present in the large pores of zeolites ($\alpha$ position), i.e. the framework aluminum atoms. Thus, a plausible approach to avoid the formation of oligomeric species is to remove framework aluminum prior to introduction of Fe.

It is therefore the objective of the present invention to provide a method for the preparation of a catalytic material which has a high activity and NOx selectivity already at low temperature and ideally also over the complete temperature range of the desired NOx reduction. Further, it is the objective of the present invention to provide a catalytic material in this regard. Furthermore, it is the objective of the present invention to provide a method for the selective catalytic reduction of the nitrogen oxides with ammonia.

With respect to the method for the preparation of the catalytic material this objective is achieved according to the present invention by a method to prepare a metal/zeolite catalytic material for selective catalytic reduction of $NO_x$ comprised in an exhaust gas stream, comprising the steps of:

a) dealuminating the zeolite in an aqueous acidic solution, or using water vapour, at an elevated temperature for a predetermined amount of time;
b) preparing a metal-complexing agent complex and stabilizing the metal-complexing agent complex at a predetermined pH in an aqueous solution;
c) mixing the dealuminated zeolite with a solution comprising the stabilized metal-complexing agent complex; and
d) drying the metal-complexing agent complex replaced zeolite and calcining the metal-complexing agent complex incorporated zeolite at elevated temperature for a predetermined amount of time for achieving the metal/zeolite catalytic material.

Thus, the method allows to obtain a catalytic material with an unprecedented high content of isolated metal species and as a consequence enhanced low temperature NH3-SCR activity. This catalytic material enables to reach high turnover frequencies (TOF). The lack of oligomeric species is reflected by the large extent of changes in the time-resolved operando fluorescence XANES spectra at the metal K-edge thus confirming the involvement of all isolated metal atoms in the redox cycle and the role of isolated metal species in low temperature NH3-SCR.

Advantageously, the zeolite can be a ZSM-5 zeolite and the metal can be iron (Fe) and/or copper (Cu) and/or chromium (Cr), preferably iron (Fe).

In order to allow the introduction of the metal-complexing agent complex, the dealumination of the zeolite can be executed in an aqueous solution of $HNO_3$, resulting in increase in pore size. Preferably, in the dealumination step $NH_4$-ZSM-5 can be used. Further, for the preparation of the metal-complexing agent complex a solution, preferably an aqueous solution, of the complexing agent and a metal salt, preferably a metal chloride, can be used. Here, the metal salt and the complexing agent, such as EDTA, can be added in stoichiometric amounts, or the complexing agent may be used in excess.

In a further preferred embodiment of the present invention, as complexing agent one or a mixture of two or more of the following complexing agents can be used: ethylenediaminetetraacetic acid (EDTA), nitrilotriacetic acid (NTA), diethylentriaminpentaacetic acid (DTPA), cyclohexanediaminetetraacetic acid (CDTA) and hydroxybenzyl ethylenediamine (HBED).

In order to stabilize the formed metal-EDTA complex, the metal-EDTA complex can be stabilized by adjusting the pH of the aqueous solution by the addition of a base solution.

With respect to the catalytic material this objective is achieved according to the present invention by a metal/zeolite catalytic material for selective catalytic reduction of $NO_x$ comprised in an exhaust gas stream wherein at least 80% of the remaining exchange sites of the metal/zeolite catalytic material are reacted with a metal-EDTA complex thereby providing isolated metal species to the zeolite, said metal/zeolite catalytic material being prepared according to the method as explained above. Excellent results in NOx conversion can advantageously be achieved when the zeolite is ZSM-5 and the metal is iron (Fe).

With respect to the process for the selective catalytic reduction of NOx comprised in an exhaust gas stream this objective is achieved according to the present invention by a process for the selective catalytic reduction of $NO_x$ contained in an exhaust gas stream, comprising the step of bringing the exhaust gas into contact with a metal zeolite catalytic material prepared according to any of the preceding claims at elevated temperature in range from 50 to 400°C at an GHSV above 100,000 $h^{-1}$. The metal/zeolite catalytic material enables these high GHSVs due to the excellent selectivity and activity of the catalytic material towards the NOx content in the exhaust gas stream that is achievable by the high portion of single metal species hosted in the pores of the dealuminated zeolite.

Further preferred embodiments of the present invention are given in the remaining dependent claims.

Preferred embodiments of the present invention are hereinafter described in more detail with reference to the attached drawings which depict in:

Figure 1 (a) FT-EXAFS spectra of calcined catalysts and (b) NO conversion in $NH_3$-SCR;

Figure 2 Operando fluorescence XANES spectra of (a) Fe-dZ-EDTA and (b) Fe-Z-Cl obtained under $NO+O_2$ (solid red) or $NO+NH_3$ (solid black), followed by NH3 addition (dotted red) or $O_2$ (dotted black) at 250°C;

Figure 3 XANES spectra of the three principal components needed to describe the behaviour of Fe-dZ-EDTA and Fe-Z-Cl and representation of the behaviour of the single Fe atom in a monomer moving in- and out-of-plane;

Figure 4 LCF analysis of operando fluorescence XANES spectra of Fe-dZ-EDTA and Fe-Z-Cl recorded during $O_2$ and $NH_3$ addition experiments at (a) 250°C and (b) 350°C;

Figure 5 Normalized operando fluorescence XANES spectra of Fe-dZ-EDTA at 200, 250, 300 and 350°C under (a) NO+NH3 and (b) $NO+O_2$ feeds;

Figure 6 $^{27}Al$ MAS NMR spectra of raw and dealuminated ZSM-5 materials;

Figure 7 Operando fluorescence XANES spectra of the initial state of Fe-dZ-EDTA and Fe-Z-Cl prior to activation and after activation; and

Figure 8 (a) Best fit of EXAFS data, (b) k-space, (c) UV-Vis spectra, (d) H2-TPR experiments.

In the present invention, the partial removal of aluminum mainly from the large member rings of the zeolite is targeted, where the aluminum is more weakly bonded. Such approach decreases the probability for a metal, such as Fe, to anchor in this position, where it tends to agglomerate. Dealumination also opens pores, which allow to exploit bulky precursors to introduce metal and increase the separation of metal atoms within the zeolite.

For this purpose, a Fe-based ZSM-5 catalyst has been produced by (i) dealuminating ZSM-5, followed by (ii) adsorption of a Fe-EDTA complex into the pores of dealuminated ZSM-5, thus being able to obtain a catalyst with an unprecedented high content of isolated Fe species and as a consequence enhanced low temperature $NH_3$-SCR activity

reaching a turnover frequency (TOF) of 79 $mol_{No} \cdot mol_{Fe}^{-1} \cdot s^{-1}$ at 250°C. The lack of oligomeric species is reflected by the large extent of changes in the time-resolved operando fluorescence XANES spectra at the Fe K-edge thus confirming the involvement of all isolated Fe atoms in the redox cycle and the role of isolated Fe species in low temperature NH3-SCR.

Zeolite supported single atom Fe species and their catalytic activity

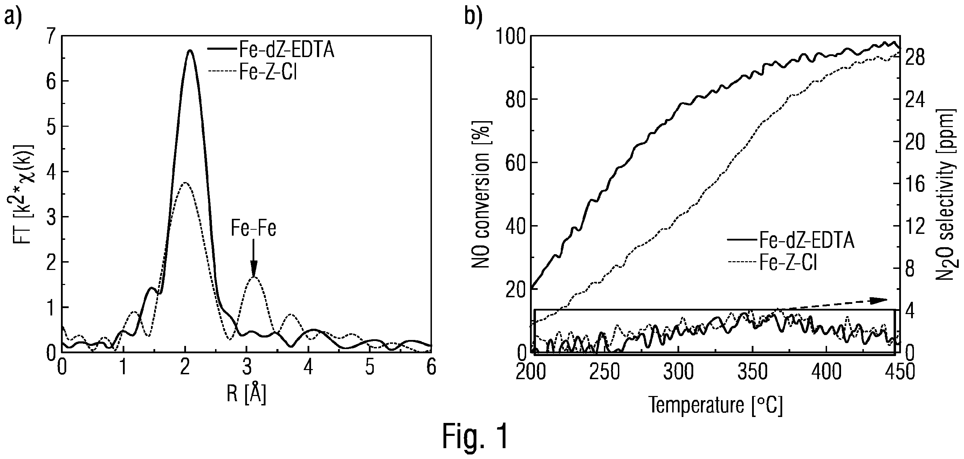

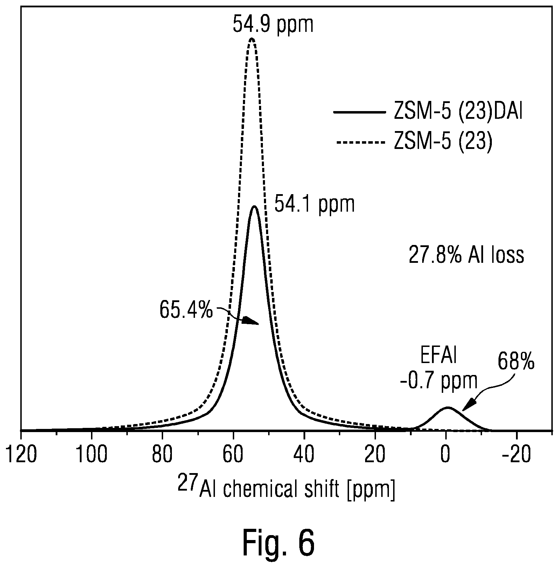

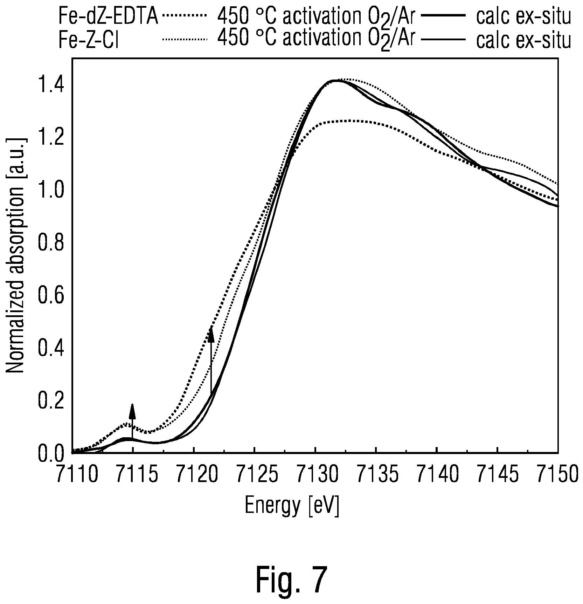

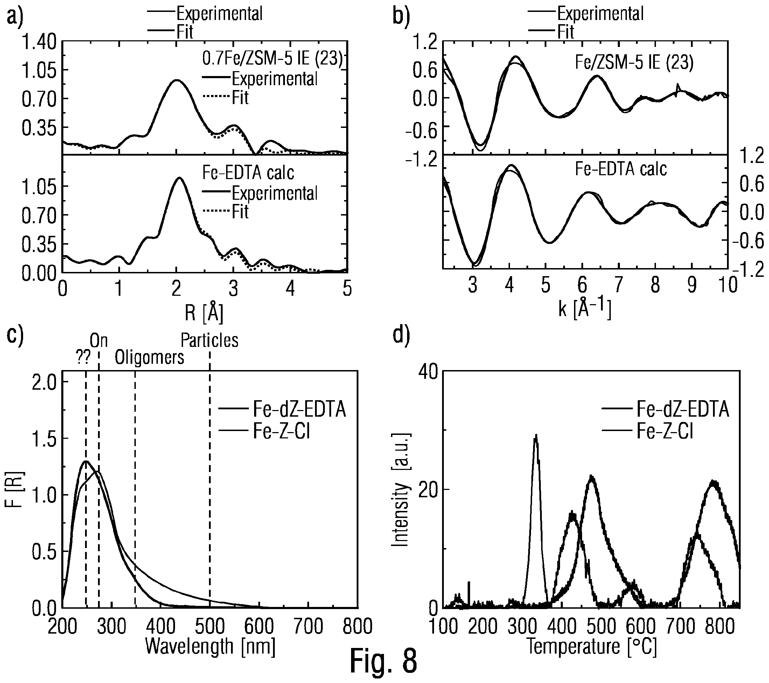

The speciation of Fe in the calcined samples obtained by dealumination of ZSM-5 and Fe-EDTA introduction ($^{27}$Al NMR of dealuminated and raw ZSM-5 in Fig. 6) and by ion-exchange of ZSM-5 (Fe-Z-Cl; $SiO_2/Al_2O_3$=23, Table 1 below) was determined especially by analysis of the corresponding extended X-ray absorption fine structure (EXAFS) spectra at the Fe K-edge of the calcined material (Figure 1a; Table 2 below). The high intensity of the Fe-O peak (1.99-2.04 Å) and the absence of a contribution due to Fe-Fe scattering at ca. 3.00 Å, indicative of Fe-O-Fe bonds in oligomers, demonstrate that the Fe species are present predominantly as isolated species. This is confirmed by the observation that the normalized XANES spectra of Fe-dZ-EDTA (Figure 7) lacks the contribution due to Fe-Fe scattering between the pre-edge (Is → 3d quadrupole transition) and the absorption edge. The best fit parameters of the EXAFS spectra (Figure 8a-b, Table 2), the UV-Vis spectra (Figure 8c) and the temperature programmed reduction thermograms ($H_2$-TPR, Figure 8d) point to two very different samples. Fe-dZ-EDTA comprises almost exclusively isolated Fe species, most likely monomers, while Fe-Z-Cl is characterized by a variety of Fe species including probably a large content of oligomers typical of ion-exchanged catalysts.

The presence of predominantly isolated Fe species obtained by our synthesis method was mirrored by a higher NO conversion in the temperature range 200-400°C (Figure 1b) at high gas hourly space velocity (GHSV = 540 000 $h^{-1}$) to enhance differences. At 300°C, the difference in NO conversion between the two catalysts was the highest, reaching 75% and 40% for Fe-dZ-EDTA and Fe-Z-Cl, respectively. The lower activity of the ion-exchanged catalyst may be explained by a higher fraction of oligomeric species and particles in this sample, in agreement with the observation that oligomeric Fe species and particles are not or are less active in low temperature $NH_3$-SCR. The Fe-dZ-EDTA sample shows high activity in the low temperature regime reaching NO conversion of 52.1% and TOF of 79 $molINO \cdot molFe^{-1} \cdot s^{-1}$ at 250°C, while Fe-Z-Cl showed 23.8% NO conversion and reached 25 $molINO \cdot molFe^{-1} \cdot s^{-1}$ at this temperature. The slightly higher activity of Fe-dZ-EDTA above 400°C must be related to the higher content of Fe in this sample (0.84 wt% Fe; Table 1) than in Fe-Z-Cl (0.7 wt% Fe).

Structure of Fe under reaction conditions

The behaviour of the very different Fe species in the two samples was followed with time-resolved operando XANES upon initiation of the $NH_3$-SCR reaction in two types of experiments at 250°C:

    (i) addition of $NH_3$ to the sample equilibrated in a $NO+O_2$ feed and
    (ii) addition of $O_2$ to the sample equilibrated in a $NO+NH_3$ feed.

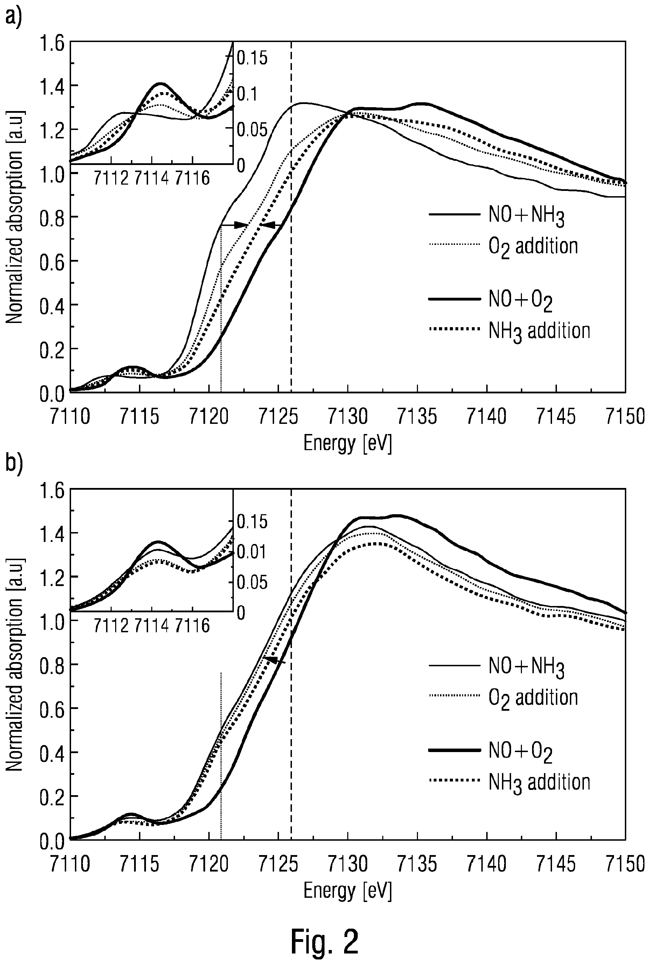

Figure 2 shows the Operando fluorescence XANES spectra of (a) Fe-dZ-EDTA and (b) Fe-Z-Cl obtained in $NO+O_2$ (solid red) and $NO+NH_3$ (solid black), followed by $NH_3$ addition (dotted red) or $O_2$ (dotted black) at 250°C. Arrows represent the direction of spectral changes upon $NH_3$-SCR initiation by either $NH_3$ or $O_2$ addition. The dotted straight line on both graphs represents the intensity of the shoulder under reducing atmosphere at around 7121 eV.

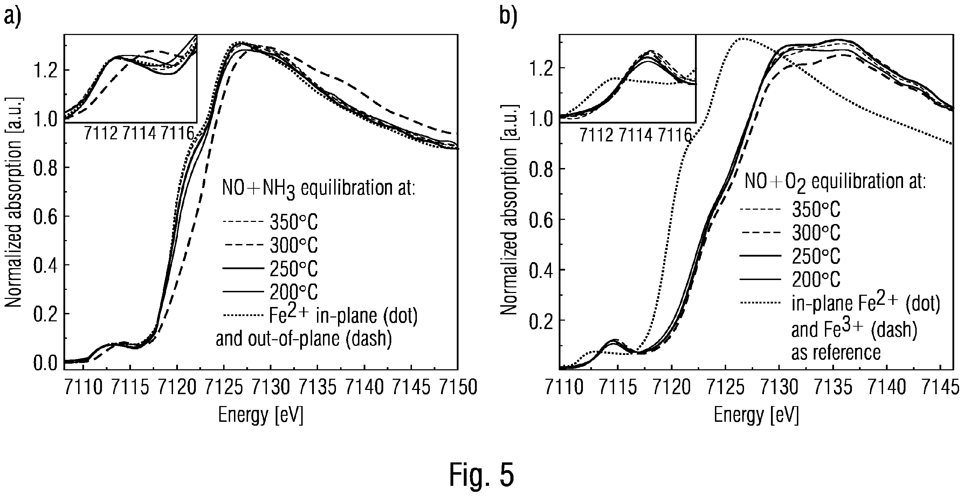

The XANES spectra of Fe-dZ-EDTA underwent very pronounced changes in both sequences (see Figure 2a). Reduction to $Fe^{2+}$ in the $NO+NH_3$ feed (black spectrum) is characterized by (i) the pre-edge feature at ca. 7112.5eV and (ii) the presence of a shoulder of the absorption edge at 7121 eV. On the other hand, equilibration in $NO+O_2$ feed, the most oxidizing conditions in the investigations, resulted in the almost complete oxidation of Fe to $Fe^{3+}$, which is represented by (i) the replacement of the pre-edge feature at 7112.5 eV by that at 7114.5 eV and (ii) the significant shift of the absorption edge by 4.4 eV towards higher energy compared to the situation in the $NO+NH_3$ feed. The absorption edge position of the spectra obtained in the two feed conditions matches that of FeO and $Fe_2O_3$ references (Figure 5). The unusual large shift of the XANES spectra of Fe-dZ-EDTA likely reflects the large fraction of the Fe atoms that is involved in the redox cycle. The changes during the same treatments were much less significant for Fe-Z-Cl (Figure 2b), in agreement with the typical behaviour of Fe-based zeolites in XAS experiments.

In order to obtain deeper insights in the Fe speciation changes during equilibration ($NO+NH_3$ or $NO+O_2$) and reactant addition ($O_2$ or $NH_3$), the complete time-resolved dataset was analyzed by principal component analysis (PCA) coupled to multivariate curve resolution alternating least square fitting (MCR-ALS). This procedure allowed to extract spectra of the most representative Fe species present in the two catalysts, which experience changes upon abrupt perturbation of the reaction conditions from most oxidizing and most reducing feeds to $NH_3$-SCR. To capture spectroscopic signatures of all the Fe species that could possibly be present, the dataset for MCR-ALS was completed by the XANES spectra recorded during temperature programmed ramps (50-450°C) in the presence of the individual reactants

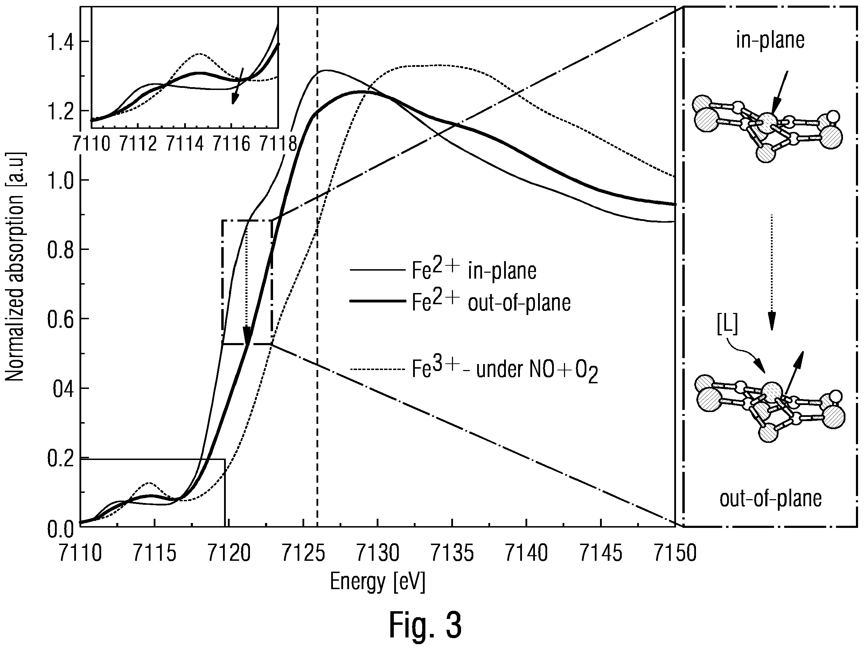

NH$_3$ or NO. PCA and MCR-ALS analysis identified three Fe components in the two catalysts, whose XANES spectra are shown in Figure 3.

Based on the vastly different position of the absorption edge, the two spectra correspond to reduced Fe$^{2+}$ species (red) and to oxidized Fe$^{3+}$ species (blue). The spectrum of Fe$^{2+}$ species is characterized by the pre-edge feature at ca. 7112.5 eV and the pronounced shoulder at 7121 eV. The spectrum of Fe$^{3+}$ species is characterized by the pronounced pre-edge feature at ca. 7114.5 eV and the absence of the shoulder in absorption edge shifted towards higher energy. The isosbestic point clearly visible at ca. 7129.5 eV that is also present in the comparison of FeO and Fe$_2$O$_3$ reference spectra (Figure 3) validates the change of oxidation state between these species. This point allows to associate the third component (black) to Fe$^{2+}$ with an additional pre-edge feature at ca. 7114.5 eV and no visible shoulder at 7121 eV.

Figure 3 shows XANES spectra of the three principal components needed to describe the behaviour of Fe-dZ-EDTA and Fe-Z-Cl and representation of the behaviour of the single Fe atom in a monomer moving in- and out-of-plane. Colour code: Fe - yellow, Al - white, Si - blue, O - red; [L] stands for a generic ligand.

The evident changes in the spectra obtained as a result of the synthetic approach and the presence of exclusively isolated Fe species in Fe-dZ-EDTA are ideally suited for structural analysis upon simulation of the XANES data, which was performed with the aid of the FDMNES software. For this purpose, an isolated Fe atom was placed in the α, β and γ sites of ZSM-5. The best fit matching the experimental data of Figure 3 was obtained for Fe in β and γ sites, thus for Fe located in a 6-member ring. This was taken as representative for isolated Fe species coordinated to four O atoms and with two Al and four Si neighboring atoms. The simulated XANES spectrum of the reduced Fe$^{2+}$ species points to the existence of Fe$^{2+}$ atoms in square- planar geometry surrounded by four O atoms. In this structure, the shoulder of the absorption edge at ca. 7121 eV is due to the Is → 4p transition. The comparison of the spectrum corresponding to the Fe$^{3+}$ species (Figure 3, blue) with those of FeO and Fe$_2$O$_3$ references (Figure S3) clearly shows that all Fe species are completely oxidized in the NO+O$_2$ feed. The best fit of the present XANES simulations for this spectrum takes into account an OH ligand, revealing that Fe$^{3+}$ is in a distorted square-pyramidal geometry, in agreement with the presence of the pre-edge feature at 7114.5 eV and previous literature reports.

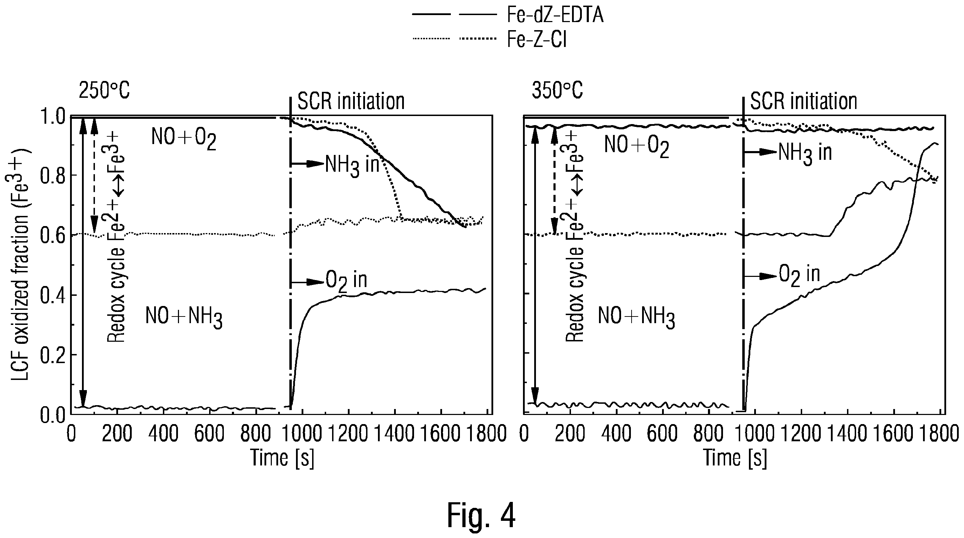

Figure 4 shows the LCF analysis of operando fluorescence XANES spectra of Fe-dZ-EDTA and Fe-Z-Cl recorded during O$_2$ and NH3 addition experiments at (a) 250°C and (b) 350°C.

Comparison of the concentration levels of Fe$^{3+}$ (Figure 4a) under reducing (NO+NH3) and oxidizing (NO+O2) feeds at 250°C shows that 98% of the Fe species of the Fe-dZ-EDTA sample undergoes a redox change (Fe$^{2+}$ ↔ Fe$^{3+}$), whereas this fraction is only 40% in the FeZ-Cl sample. Similar redox properties are found at 350°C. Therefore, almost all Fe species present in the Fe-dZ-EDTA catalyst actively participate in the NH3-SCR reaction and exhibit full redox potential at 250°C and 350°C. On the contrary, in the ion-exchanged sample a large portion of species is permanently oxidized and is thus not likely to participate in the catalytic cycle. This is most probably the fraction of Fe atoms present as oligomeric species. Therefore, the high activity at low temperature NH3-SCR of the Fe-dZ-EDTA sample (Figure 1b) must be ascribed to the vastly different response of Fe species in the two samples and to the maximized fraction of isolated Fe species obtained by the selected synthesis method.

Decrease in NH3-SCR activity with decreasing temperature

Because Figure 1b demonstrates an improved low temperature NH3-SCR activity of Fe-dZ-EDTA (200-400°C), Fe K-edge fluorescence XANES spectra were recorded under reducing (NO+NH3) and oxidizing (NO+O2) conditions with decreasing temperature, i.e. 350, 300, 250 and 200°C, as this is shown in Figure 5. The spectra recorded under the stronger reducing conditions of NO+NH3 than only NH3 demonstrate a gradual decrease of the shoulder of the absorption edge with decreasing temperature (Figure 5a).

Conclusions

The present invention discloses a method to prepared a Fe-ZSM-5 catalyst by introduction of a Fe-EDTA complex into a dealuminated ZSM-5 in which the fraction of isolated Fe species is maximized resulting in significantly higher low temperature NH$_3$-SCR activity compared to the standard ion-exchanged catalyst. Operando XAS revealed that all isolated Fe species are involved in the redox activity of NH$_3$-SCR. XANES simulations assigned a distorted square-planar geometry to the isolated Fe species under reducing conditions, which are characterized by a prominent shoulder at the rising absorption edge typical of Fe$^{2+}$. While square-planar species were also present in the ion-exchanged catalyst, extraction of the pure XANES spectra would have been impossible without the data set obtained with the novel catalyst due to the large fraction of oligomeric species. The present invention represents a major step towards a better understanding of the structure of the active Fe sites under operational conditions and provides a clear description how to prepare better Fe-based catalysts for NH$_3$-SCR.

Methods

i) Synthesis of Fe/ZSM-5 samples

$NH_4$-ZSM-5 zeolite with MFI structure ($SiO_2/Al_2O_3$ = 23; 400 $m^2$/g; Alfa Aesar) was ion-exchanged with an aqueous solution of $FeCl_2$ of 0.05 M (100ml/$g_{zeolite}$) at 80°C for 24 h and under stirring in $N_2$ atmosphere in order to avoid oxidation of $Fe^{2+}$ ions, which would cause precipitation of $Fe^{3+}$ and formation of oligomers/particles. $NH_4Cl$ was added in order to control the degree of exchange, in such amount that the molar ratio between $Fe^{2+}$ and $NH_4^+$ reached 1:0.5. This sample (Fe-Z-Cl) was then filtered, washed with distilled water, dried at 80°C overnight and calcined in a stream of air at 500°C (2°C/min) for 4 h.

For the intended modification with ethylenediaminetetraacetic acid (EDTA) as complexing agent, $NH_4$-ZSM-5 was dealuminated in an aqueous solution of $HNO_3$ (2 M; 100 ml/g of zeolite) at 80°C for 24 h, this procedure being repeated three times. Then, the material was filtered, washed with distilled water (2 L) and dried at 80°C overnight. The Fe-EDTA complex was prepared using aqueous solutions of EDTA and $FeCl_2$ in stoichiometric amounts. The solution of $FeCl_2$ was added dropwise to the solution of EDTA under vigorous stirring. In order to stabilize the Fe-EDTA complex, the pH was adjusted to 4 using an aqueous solution of NaOH (1 M). The XANES spectra were recorded for Fe(II)-EDTA and $FeCl_2$ as Fe precursor in the present synthesis methods. The freshly prepared solution of the complex was added dropwise to an aqueous suspension of the dealuminated ZSM-5 preheated to 65°C under $N_2$ atmosphere. The suspension was left under vigorous stirring for 24 h, followed by filtering, washing with distilled water (only in case of Fe-Z-Cl) drying at 80°C overnight and by calcination in a stream of air at 500°C (2°C/min) for 4 h to obtain the Fe-dZ-EDTA sample.

ii) Catalytic tests

The performance of the catalysts in the selective catalytic reduction of NO with $NH_3$ was evaluated at atmospheric pressure in a tubular quartz reactor with a K-type thermocouple inserted in the catalyst bed. Prior to the reaction the catalyst was activated in a stream of 10 vol% $O_2/N_2$ at 550°C for 1 h at a heating ramp of 5°C/min. Then, the sample was exposed to the feed of 500 ppm NO, 600 ppm $NH_3$, 10 vol% $O_2$, 5 vol% $H_2O$ and $N_2$ at a gas hourly space velocity (GHSV) of 540,000 $h^{-1}$ at 550°C and the catalytic tests were started while cooling to 200°C at a ramp of 5°C/min. The gas products including $NH_3$, NO, $NO_2$, $N_2O$ and $H_2O$ were analyzed using an online FTIR spectrometer (Antaris IGS, Thermo) equipped with at an acquisition time of 1s/spectrum. The NO conversion ($X_{NO}$) was calculated using the following equation:

$$X_{NO} = (1 - NO_{out}/NO_{in}) \times 100\%$$

The turnover frequency (TOF, $mol_{NO}$ $mol_{Fe}^{-1}$ $s^{-1}$) values were calculated using the following formula:

$$TOF = (X_{NO} * F_{NO})/n_{Fe}$$

where $X_{NO}$, $F_{NO}$ and $n_{Fe}$ are the NO conversion, the flow of NO (mol·$s^{-1}$) and the moles of Fe in the catalytic bed, respectively.

iii) Operando XAS

The sample (ca. 20 mg) was fixed between two quartz wool plugs (2 mm thick and 3 mm long) in a custom-made cell. Two graphite windows (thickness, 0.5 mm) on both sides of the cell were used to seal the cell and air-tighten the reaction environment. A K-type thermocouple was placed inside the catalytic bed from the inlet side of the cell. Mass flow controllers (Bronkhorst) were used to prepare the reaction mixtures with a constant flow of 100 mL·$min^{-1}$. The transient experiments were carried out with the aid of automated switching valves (Series 9, Parker) with an opening response time of $\leq$ 5ms. The switching valves were installed as close to the reaction cell as possible, the distance between the middle of the catalytic bed and switching valves being approximately 60 mm. In order to ensure that there is no influence of the beam on the reaction, thus on Fe speciation (beam damage), an Al filter of 80μm thickness was applied, thus, resulting in reduction of the beam flux by around 96%.

The operando XAS measurements were carried out in fluorescence mode using a passivated implanted planar Silicon (PIPS) detector at the SuperXAS beamline of the Swiss Light Source (SLS, Villigen AG, Switzerland). The storage ring operated at 2.4 GeV in top-up mode with a ring current of 400 mA. The polychromatic beam was collimated by a Si-coated mirror at 2.5 mrad and monochromatized by a Si(311) channel-cut monochromator, which allows data collection in a quick-scanning mode. For energy calibration a Fe foil was placed between the 2nd and the 3rd ionization chamber for absolute energy calibration. As the measurements were performed in fluorescence mode, the cell was moved away from the beam for the first 10 seconds in order to record the Fe foil for energy calibration. The quick-XAS spectra collected were averaged, background corrected and normalized using the ProXAS software. The same software was used for MCR spectra extraction from the whole dataset, and for further linear combination fit (LCF) analysis of the operando XAS data.

Prior to the cut-off and addition experiments the catalysts were activated at 450°C for 1 h in a flow of 10 vol% $O_2$/Ar. All operando fluorescence XANES spectra were recorded with sub-second time resolution (0.5 s·spectrum$^{-1}$). Spectra were collected first during equilibration in either NO+$NH_3$ or NO+$O_2$ for 15 min at a given temperature. Static spectra were obtained by averaging 30 consecutive spectra in one data point for a total of 15 s. After equilibration, a second series of spectra was started in the same feed and after 1 min of data acquisition, SCR initiation was obtained by addition of $NH_3$ to the NO+$O_2$ feed or $O_2$ to the $NH_3$+NO feed using automated solenoid valves (Series 9, Parker).

Table 1. Labelling of the synthesized materials, elemental analysis and description of preparation methods.

| Sample | Fe | $S_{BET}$ [m²/g] | Synthesis method |
|---|---|---|---|
| ZSM-5 raw (SiO$_2$/Al$_2$O$_3$ = 23) | - | 420 | - |
| ZSM-5 DAl (ZSM-5 Si/Al = 23 DAl) | - | 366 | dealumination in a 2M solution of HNO$_3$ at 80°C for 24h, repeated three times |
| Fe-dZ-EDTA | 0.84 | 354 | Fe-introduction using an aqueous solution of Fe-EDTA |
| Fe-Z-Cl | 0.70 | 370 | ion-exchange using FeCl$_2$ solution |

Table 2. EXAFS fitting results for as-synthesized materials.

| Sample | Path | CN | R(Å) | $\sigma^2$ | $\Delta$E [eV] |
|---|---|---|---|---|---|
| Fe-dZ-EDTA | Fe-O | 4.5 +/- 0.5 | 2.04 | 0.012 | 0.76 |
|  | Fe-Fe | 0.0 +/- 0.1 | 3.04 | 0.028 |  |
| Fe-Z-Cl | Fe-O | 4.0 +/- 0.7 | 1.99 | 0.013 | 1.15 |
|  | Fe-Fe | 0.7 +/- 0.6 | 3.00 | 0.006 |  |

**Claims**

1. A method to prepare a metal/zeolite catalytic material for selective catalytic reduction of NO$_x$ contained in an exhaust gas stream, comprising the steps of:

    a) dealuminating the zeolite in an aqueous acidic solution, or using water vapour, at an elevated temperature for a predetermined amount of time;
    b) preparing a metal-complexing agent complex and stabilizing the metal-complexing agent complex at a predetermined pH in an aqueous solution;
    c) mixing the dealuminated zeolite with a solution comprising the stabilized metal-complexing agent complex; and
    d) drying the metal-complexing agent complex replaced zeolite and calcining the metal-complexing agent complex incorporated zeolite at elevated temperature for a predetermined amount of time for achieving the metal/zeolite catalytic material.

2. The method according to claim 1 wherein the zeolite is a ZSM-5 and the metal is iron (Fe) and/or copper (Cu) and/or platinum (Pt) and/or palladium (Pd).

3. The method according to claim 1 or 2, wherein the dealumination of the zeolite is executed in an aqueous solution of HNO$_3$.

4. The method according to any of the preceding claims wherein as complexing agent one or a mixture of two or more of the following complexing agents are used: ethylenediaminetetraacetic acid (EDTA), nitrilotriacetic acid (NTA), diethylentriaminpentaacetic acid (DTPA), cyclohexanediaminetetraacetic acid (CDTA) and hydroxybenzyl ethylenediamine (HBED).

5. The method according to any of the preceding claims wherein for the preparation of the metal-complexing agent complex an aqueous solution of the complexing agent and a metal salt, preferably a metal chloride, is used.

6. The method according to claims 5 wherein the metal salt and EDTA are added in stoichiometric amounts or EDTA is added in excess.

7. The method according to any of the preceding claims wherein the metal-EDTA complex is stabilized by adjusting the pH of the aqueous solution by the addition of NaOH solution.

8. The method according to any of the preceding claims wherein in the dealumination step $NH_4$-ZSM-5 is used.

9. A metal/zeolite catalytic material for selective catalytic reduction of $NO_x$ contained in an exhaust gas stream produced according to any of the preceding claims 1 to 8, wherein at least 80% of the remaining exchange sites of the metal/zeolite catalytic material are reacted with a metal-complexing agent complex thereby providing isolated metal species to the zeolite.

10. The metal/zeolite catalytic material according to claim 9, wherein the zeolite is ZSM-5 and the metal is iron (Fe).

11. A process for the selective catalytic reduction of $NO_x$ contained in an exhaust gas stream, comprising the step of bringing the exhaust gas into a contact with a metal zeolite catalytic material prepared according to any of the preceding claims 1 to 8 at elevated temperature in range from 50 to 400°C at an GHSV above 100,000 $h^{-1}$.

Fig. 1

EP 4 098 359 A1

Fig. 2

Fig. 3

EP 4 098 359 A1

Fig. 4

Fig. 5

Fig. 6

Fig. 7

Fig. 8

Europäisches
Patentamt

European
Patent Office

Office européen
des brevets

## EUROPEAN SEARCH REPORT

Application Number

EP 21 17 7194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/070639 A2 (BASF CATALYSTS LLC [US]) 21 June 2007 (2007-06-21) * claims; examples * ----- | 1-11 | INV. B01J29/46 B01D53/94 B01J37/02 |
| A | YUAN ENHUI ET AL: "One-pot construction of Fe/ZSM-5 zeolites for the selective catalytic reduction of nitrogen oxides by ammonia", CATALYSIS SCIENCE & TECHNOLOGY, vol. 7, no. 14, 1 January 2017 (2017-01-01), pages 3036-3044, XP055847321, UK ISSN: 2044-4753, DOI: 10.1039/C7CY00724H * the whole document * ----- | 1-11 | |
| A | BRANDENBERGER S ET AL: "The State of the Art in Selective Catalytic Reduction of NOx by Ammonia Using Metal-Exchanged Zeolite Catalysts", CATALYSIS REVIEWS: SCIENCE AND ENGINEERING, MARCEL DEKKER INC. NEW YORK, US, vol. 50, 1 January 2008 (2008-01-01), pages 492-531, XP001526478, ISSN: 0161-4940, DOI: 10.1080/01614940802480122 * the whole document * ----- | 1-11 | |

TECHNICAL FIELDS
SEARCHED (IPC)

B01J
B01D

The present search report has been drawn up for all claims

| Place of search | Date of completion of the search | Examiner |
|---|---|---|
| The Hague | 7 October 2021 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 7194

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2021

| Patent document cited in search report | Publication date | Patent family member(s) | | Publication date |
|---|---|---|---|---|
| WO 2007070639 A2 | 21-06-2007 | BR | PI0619944 A2 | 25-10-2011 |
| | | CN | 101336129 A | 31-12-2008 |
| | | EP | 1973633 A2 | 01-10-2008 |
| | | JP | 5261189 B2 | 14-08-2013 |
| | | JP | 2009519817 A | 21-05-2009 |
| | | KR | 20080081031 A | 05-09-2008 |
| | | US | 2007134146 A1 | 14-06-2007 |
| | | US | 2010172814 A1 | 08-07-2010 |
| | | WO | 2007070639 A2 | 21-06-2007 |
| | | ZA | 200806013 B | 28-10-2009 |

EPO FORM P0459

For more details about this annex : see Official Journal of the European Patent Office, No. 12/82